# EUROPEAN PATENT SPECIFICATION

(11) **EP 2 019 532 B1**
(45) Date of publication and mention of the grant of the patent: **24.10.2018**
(21) Application number: 08009848.6
(22) Date of filing: 29.05.2008
(51) Int. Cl.: H04W 48/12, H04L 29/06, H04W 28/06, H04W 72/12

(54) **Method and apparatus for improving transmission of downlink shared channel in a wireless communications system**
Verfahren und Vorrichtung zur Verbesserung der Übertragung eines gemeinsam genutzten Abwärtsstreckenkanals in einem drahtlosen Kommunikationssystem
Procédé et appareil pour améliorer la transmission de canal partagé descendant dans un système de communication sans fil

(30) Priority: 31.05.2007 US 940975 P
(43) Date of publication of application: 28.01.2009
(60) Divisional application: 18194453.9
(73) Proprietor: Innovative Sonic Limited, Ebene 72201 (MU)
(72) Inventor: Tseng, Li-Chih, Peitou, Taipei City (TW); Kuo, Richard Lee-Chee, Peitou, Taipei City (TW)
(74) Representative: Hoefer & Partner Patentanwälte mbB

(56) References cited:
- WO-A-2004/042952
- "Universal Mobile Telecommunications System (UMTS); Medium Access Control (MAC) protocol specification (3GPP TS 25.321 version 7.4.0 Release 7); ETSI TS 125 321" ETSI STANDARDS, LIS, SOPHIA ANTIPOLIS CEDEX, FRANCE, vol. 3-R2, no. V7.4.0, 1 March 2007 (2007-03-01), XP014037915 ISSN: 0000-0001

## Description

This application claims the benefit of U.S. Provisional Application No. 60/940975, filed on May 31, 2007 and entitled "Method and Apparatus for Improving MAC-ehs header of BCCH and PCCH mapped to HS-DSCH in a Wireless Communication System."

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting the third generation mobile telecommunication technology, the 3rd Generation Partnership Project (3GPP) provides High Speed Package Access (HSPA) technology, which includes High Speed Downlink Package Access (HSDPA) and High Speed Uplink Package Access (HSUPA), to increase bandwidth utility rate and package data processing efficiency to improve uplink/downlink transmission rate.

On the basis of HSDPA, the 3GPP further introduces HS-DSCH (High Speed Downlink Shared Channel) reception in a CELL_FACH, a CELL_PCH and a URA_PCH state, allowing the UE in these states to monitor an HS-DSCH accompanied with a Shared Control Channel for HS-DSCH (HS-SCCH) for downlink data reception, so as to improve a peak data rate, a signaling delay, a state transition delay, download times and flexible cell capacity.

In the HS-DSCH reception, a Media Access Control (MAC) layer utilizes a MAC-ehs entity for mapping logical channels to an HS-DSCH. Associated logical
channels are dedicated-type logical channels including a Dedicated Control Channel (DCCH) and a Dedicated Traffic Channel (DTCH) or common-type logical channels including a Paging Control Channel (PCCH) and a Broadcast Control Channel (BCCH). Detailed operations of the MAC-ehs entity can be found in the MAC protocol specification formulated by the 3GPP, and are not narrated herein.

WO 2004/042952 describes a data transmission method that generates a protocol data unit (PDU) by concatenating one or more service data units (SDU) as payload and adding a header to the payload, and that transfers the PDU to a lower layer.

"Universal Mobile Telecommunications Systems (UMTS); Medium Access Control (MAC) protocol specifications (3GPP TS 25.321 version 7.4.0 Release 7, item 9)" specifies elements for peer-to-peer communication including the formats and parameters for a MAC header for BCCH.

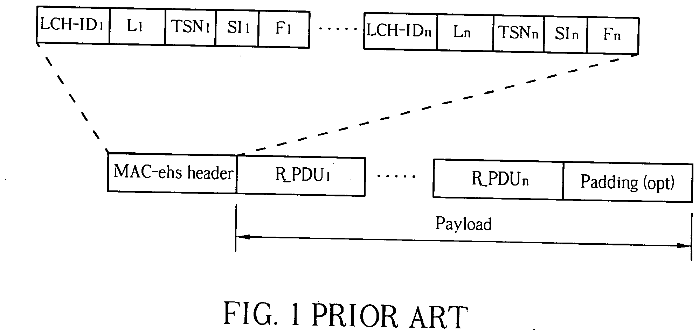

On the other hand, please refer to FIG. 1, which illustrates a schematic diagram of a MAC-ehs Protocol Data Unit (PDU). The MAC-ehs PDU is a transmission packet of the MAC-ehs entity, and consists of a plurality of reordering PDUs and a corresponding MAC-ehs header. Each reordering PDU consists of at least one consecutive MAC-ehs Serving Data Unit (SDUs) or segments of MAC-ehs SDUs belonging to the same priority queue, or reordering queue. A MAC-ehs SDU, i.e. an upper layer PDU, is either a MAC-c PDU or a MAC-d PDU. For the MAC-ehs header, five header fields are defined in the MAC protocol as follows: Logical channel identifier (LCH-ID), Length (L), Transmission Sequence Number (TSN), Segmentation Indication (SI) and Flag (f). The LCH-ID field provides identification of a logical channel corresponding to each MAC-ehs SDU or segment of MAC-ehs SDU in the MAC-ehs packet. The L field provides data length of each MAC-ehs SDU or segment of MAC-ehs SDU. The TSN field provides an identifier for a TSN of each reordering PDU for reordering purpose. The SI field indicates whether MAC-ehs SDUs included in each reordering PDU are segmented and segmentation type of the reordering PDU for reassembly. The F field then indicates if more header fields are present in the MAC-ehs header or not.

However, when the BCCH is mapped to the HS-DSCH, the MAC-ehs header generated according to the prior art is redundant, which means a user equipment (UE) is able to receive messages transmitted on the BCCH through the HS-DSCH successfully without using the MAC-ehs header. Analysis on each filed of the MAC-ehs header is given in the following.

First, when the HS-DSCH reception is performed, BCCH mapped to HS-DSCH is utilized for transmitting a SYSTEM INFORMATION CHANGE INDICATION message to UEs operated in the CELL_FACH or the CELL_PCH state. For BCCH reception, a BCCH specific H-RNTI (Radio Network Temporary Identifier) indicated in system information is utilized by the UEs for listening to the HS-SCCH to receive packet data of the BCCH through the HS-DSCH. In this case, MAC packets received by the UE can be identified belonging to the BCCH by the BCCH specific H-RNTI, so there is no need to include the LCH-ID field in the MAC-ehs header.

In addition, based on a Radio Resource Control (RRC) specification formulated by the 3GPP, the SYSTEM INFORMATION CHANGE INDICATION message is transmitted in Transparent Mode (TM), and the RRC layer shall add padding when the encoded SYSTEM INFORMATION CHANGE INDICATION message does not fill a transport block. In this case, a whole transport block received by the HS-DSCH only contains one MAC SDU, and includes no padding bits added by the MAC layer. So the L field is not needed in the MAC-ehs header.

On the other hand, according to a change request R2-072305 disclosed by the 3GPP, no MAC-ehs reordering queue is configured for BCCH reception as specified in an information element (IE) "RB information parameters for BCCH mapped to HS-DSCH." Thus, when a transport block corresponding to the BCCH is received, the MAC layer just passes the received transport block to the RRC layer without reordering. So the TSN field is not needed in the MAC-ehs header.

Moreover, according to a change request R2-072258 disclosed by the 3GPP, the network would not perform segmentation for MAC-ehs SDUs from the BCCH as specified in a subclause 6.2 "Relation between MAC Functions and Transport Channels." So, the SI field is not needed in the MAC-ehs header. If all of the above four fields are not present, the F filed is not needed either.

In short, when the BCCH is mapped to the HS-DSCH, the MAC-ehs header included in the MAC-ehs PDU is redundant, which causes extra signaling overhead and waste of system resources.

This in mind, the present invention aims at providing a method and apparatus for improving a reordering functionality in a wireless communications system, so as to enhance transmission efficiency.

This is achieved by a method and apparatus for improving a packet header of a packet transmitted when a broadcast control channel is mapped to a downlink shared transport channel in a wireless communications system according to the pre-characterizing clauses of the independent claims. The dependent claims pertain to corresponding further developments and improvements.

As will be seen more clearly from the detailed description following below, the claimed method for improving transmission of a downlink shared transport channel in a wireless communications system comprises mapping a broadcast control channel to a downlink shared transport channel by a media access control, named MAC hereinafter, protocol entity for transmission of a system information broadcast message through the downlink shared transport channel; and forming a MAC protocol data unit, named PDU hereinafter, according to the system information broadcast message, wherein the MAC PDU comprises no header fields, wherein a specific radio network temporary identifier is utilized for the transmission of the system information broadcast message through the downlink shared transport channel.

In the following, the invention is further illustrated by way of example, taking reference to the accompanying drawings. Thereof
FIG.1 illustrates a schematic diagram of a MAC-ehs PDU.
FIG.2 is a schematic diagram of a wireless communications system.
FIG.3 is a functional block diagram of a communications device.
FIG.4 is a diagram of the program code shown in FIG.3.
FIG.5 illustrates a schematic diagram of a process according to an embodiment of the present invention.

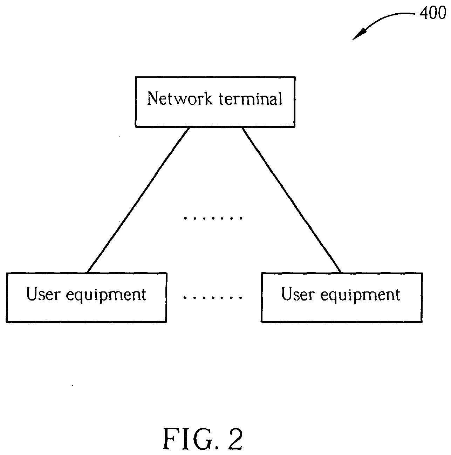

Please refer to FIG.2, which is a schematic diagram of a wireless communications system 400. The wireless communications system 400 is preferred to be a High Speed Package Access (HSPA) system or a Long Term Evolution (LTE) system of a third generation (3G) mobile communications system, and is briefly formed with a network terminal and a plurality of user equipments. In FIG.2, the network terminal and the user equipments are simply utilized for illustrating the structure of the wireless communications system 400. Practically, the network terminal may include a plurality of base stations, radio network controllers, and so on according to actual demands, and the user equipments (UEs) can be apparatuses such as mobile phones, computer systems, etc.

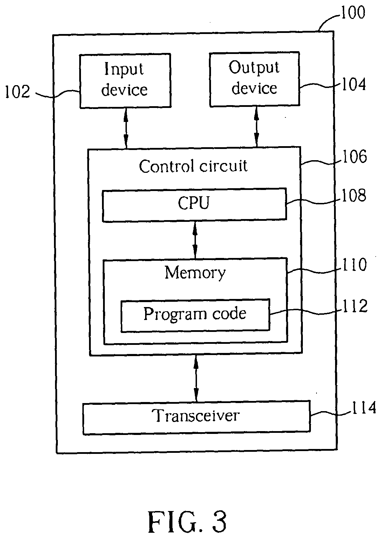

Please refer to FIG.3, which is a functional block diagram of a communications device 100. The communications device 100 can be utilized for realizing the network terminal or the user equipments in FIG .2. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 supports HS-DSCH (High Speed Downlink Shared Channel) reception in a CELL_FACH, a CELL_PCH and a URA_PCH state.

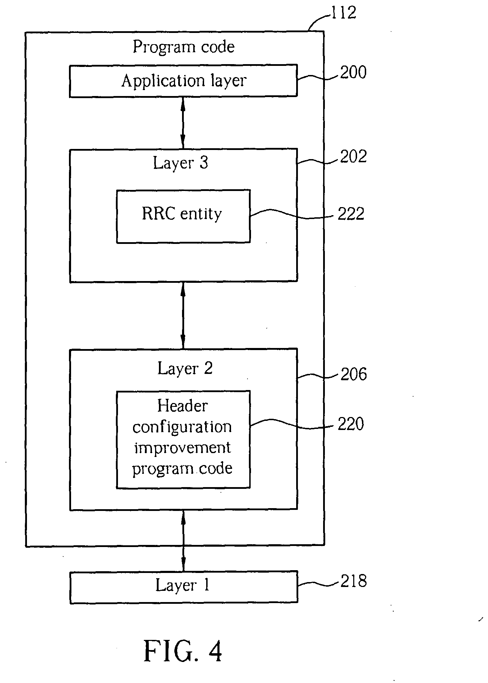

Please continue to refer to FIG.4. FIG.4 is a diagram of the program code 112 shown in FIG.3. The program code 112 includes an application layer 200, a Layer 3 202, and a Layer 2 206, and is coupled to a Layer 1 218. The Layer 3 202 includes a radio resource control (RRC) entity 222 for controlling the Layer 1 218 and the Layer 2 206 with RRC messages and information elements (IEs). Furthermore, the RRC entity 222 can change an RRC state of the communications device 100 among an Idle mode, a CELL_PCH, a URA_PCH, a CELL_FACH or a CELL_DCH state. The Layer 2 206 includes a radio link control (RLC) layer and a media access control (MAC) layer, which exchange packets via logical channels. In addition, the MAC layer exchanges MAC packets with the Layer 1 218 via transport channels. In the HS-DSCH reception, the MAC layer is utilized for mapping logical channels to an HS-DSCH. Associated logical channels are dedicated-type logical channels including a Dedicated Control Channel (DCCH) and a Dedicated Traffic Channel (DTCH) or common-type logical channels including a Paging Control Channel (PCCH) and a Broadcast Control Channel (BCCH).

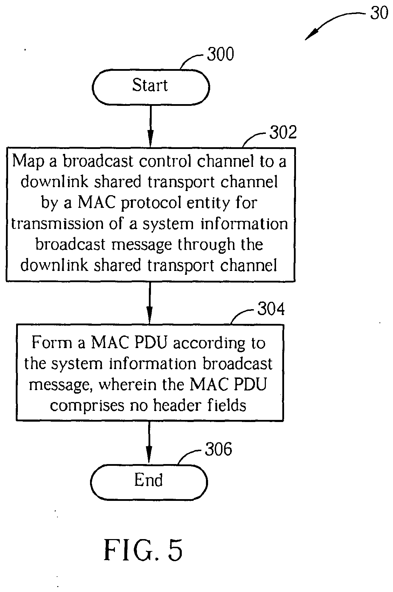

When the HS-DSCH reception is performed, BCCH mapped to HS-DSCH is utilized for transmission of a SYSTEM INFORMATION CHANGE INDICATION message. In this case, the embodiment of the present invention provides a header configuration improvement program code 220 in the program code 112 for improving a packet header of a packet transmitted when a broadcast control channel is mapped to a downlink shared transport channel. Please refer to FIG.5, which illustrates a schematic diagram of a process 30 according to an embodiment of the present invention. The process 30 is utilized for improving transmission of a downlink shared transport channel in a wireless communications system, and can be compiled into the header configuration improvement program code 220. The process 30 includes the following steps:
Step 300: Start.
Step 302: Map a broadcast control channel to a downlink shared transport channel by a MAC protocol entity for transmission of a system information broadcast message through the downlink shared transport channel.
Step 304: Form a MAC protocol data unit (PDU) according to the system information broadcast message, wherein the MAC PDU comprises no header fields
Step 306: End.

According to the process 30, a broadcast control channel is mapped to a downlink shared transport channel by the MAC protocol entity for transmitting a system information broadcast message through the downlink shared transport channel. Then, a MAC PDU is formed according to the system information broadcast message, wherein there is no header field included in the MAC PDU in the embodiment of the present invention. Preferably, a specific radio network temporary identifier is utilized for transmission of the system information broadcast message through the downlink shared transport channel. In addition, the system information broadcast message is transmitted in Transparent Mode (TM), and the RRC layer shall add padding when the system information broadcast message being transmitted does not fill a transport block. In this situation, the MAC PDU only includes one MAC SDU corresponding to the system information broadcast message, and includes no padding bits added by the MAC layer.

Thus, when the broadcast control channel is mapped to the downlink shared transport channel, there is no MAC header included in the MAC PDU being transmitted, and packet data of the broadcast control channel can still be correctly transmitted through the downlink shared transport channel. Consequently, extra signaling overhead can be reduced in the embodiment of the present invention, as well as system resources and electric power consumed by handling the packet header.

Note that, in the embodiment of the present invention, the downlink shared transport channel can be a High Speed Downlink Shared Channel (HS-DSCH) of the HSPA system or a Downlink Shared Channel (DL-SCH) of the LTE system, and not restricted herein.

As mentioned above, when the broadcast control channel is mapped to the downlink shared transport channel, no MAC header is included in the MAC PDU of the present invention, so that extra signaling overhead can be reduced, as well as system resources and electric power consumed by handling the header.

## Claims

1. A method for improving transmission of a downlink shared transport channel in a wireless communications system, the method comprising:
mapping a broadcast control channel to a downlink shared transport channel by a media access control, named MAC hereinafter, protocol entity for transmission of a system information broadcast message through the downlink shared transport channel (302); and
**characterized by**
forming a MAC protocol data unit, named PDU hereinafter, according to the system information broadcast message, wherein the MAC PDU comprises no header fields (304),
wherein a specific radio network temporary identifier is utilized for the transmission of the system information broadcast message through the downlink shared transport channel.

2. The method of claim 1, **characterized in that** the MAC PDU comprises only one MAC service data unit, named SDU, corresponding to the system information broadcast message.

3. The method of claim 1, **characterized in that** the MAC PDU comprises no padding bits added by the MAC protocol entity.

4. The method of claim 1, **characterized in that** the method further comprises:
padding the system information broadcast message to fit in with a transport block size by an upper layer protocol entity.

5. The method of claim 4, **characterized in that** the upper layer protocol entity is a radio resource control, named RRC, protocol entity.

6. A communications device (100) used in a wireless communications system for improving transmission of a downlink shared transport channel, the communications device (100) comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
mapping a broadcast control channel to a downlink shared transport channel by a media access control, named MAC hereinafter, protocol entity for transmission of a system information broadcast message through the downlink shared transport channel (302); and
**characterized by**
forming a MAC protocol data unit, named PDU hereinafter, according to the system information broadcast message, wherein the MAC PDU comprises no header fields (304),
wherein a specific radio network temporary identifier is utilized for the transmission of the system information broadcast message through the downlink shared transport channel.

7. The communications device (100) of claim 6, **characterized in that** the MAC PDU comprises only one MAC service data unit, named SDU, corresponding to the system information broadcast message.

8. The communications device (100) of claim 6, **characterized in that** the MAC PDU comprises no padding bits added by the MAC protocol entity.

9. The communications device (100) of claim 6, **characterized in that** the program code (112) further comprises:
padding the system information broadcast message to fit in with a transport block size by an upper layer protocol entity.

10. The communications device (100) of claim 6, **characterized in that** the upper layer protocol entity is a radio resource control, named RRC, protocol entity.

## Patentansprüche

1. Verfahren zur Verbesserung einer Übertragung eines gemeinsam genutzten Abwärtsstrecken-Transportkanals in einem drahtlosen Kommunikationssystem, wobei das Verfahren umfasst:
Abbilden eines Broadcast-Steuerkanals auf einen gemeinsam genutzten Abwärtstrecken-Transportkanal durch eine Protokolleinheit einer Medienzugriffssteuerung, im Folgenden MAC genannt, für eine Übertragung einer Broadcast-Nachricht einer Systeminformation über den gemeinsam genutzten Abwärtsstrecken-Transportkanal (302); und
**gekennzeichnet ist durch**
Bilden einer MAC-Protokolldateneinheit, im Folgenden PDU genannt, gemäß der Broadcast-Nachricht einer Systeminformation, wobei die MAC-PDU keine Header- bzw. Kopfzeilenfelder umfasst (304),
wobei eine spezifische temporäre Funknetzwerkkennung für die Übertragung der Broadcast-Nachricht einer Systeminformation über den gemeinsam genutzten Abwärtsstrecken-Transportkanal genutzt wird.

2. Verfahren nach Anspruch 1, **dadurch gekennzeichnet, dass** die MAC-PDU nur eine MAC-Servicedateneinheit, SDU genannt, entsprechend der Broadcast-Nachricht einer Systeminformation umfasst.

3. Verfahren nach Anspruch 1, **dadurch gekennzeichnet, dass** die MAC-PDU keine von der MAC-Protokolleinheit hinzugefügten Padding- bzw. Füll-Bits umfasst.

4. Verfahren nach Anspruch 1, **dadurch gekennzeichnet, dass** das Verfahren ferner umfasst:
Auffüllen der Broadcast-Nachricht einer Systeminformation, um in eine Transportblockgröße zu passen, durch eine Protokolleinheit einer höheren Ebene.

5. Verfahren nach Anspruch 4, **dadurch gekennzeichnet, dass** die Protokolleinheit einer höheren Ebene eine Protokolleinheit einer Funkressourcen-Steuerung, RRC genannt, ist.

6. Kommunikationsvorrichtung (100), die in einem drahtlosen Kommunikationssystem verwendet wird, um eine Übertragung eines gemeinsam genutzten Abwärtsstrecken-Transportkanals zu verbessern, wobei die Kommunikationsvorrichtung (100) umfasst:
eine Steuerschaltung (106) zum Realisieren von Funktionen der Kommunikationsvorrichtung (100);
eine zentrale Verarbeitungseinheit (108), die in der Steuerschaltung (106) installiert ist, zum Ausführen eines Programmcodes (112), um die Steuerschaltung (106) zu betreiben; und
einen Speicher (110), der mit der zentralen Verarbeitungseinheit (108) gekoppelt ist, zum Speichern des Programmcodes (112);
wobei der Programmcode (112) umfasst:
Abbilden eines Broadcast-Steuerkanals auf einen gemeinsam genutzten Abwärtsstrecken-Transportkanal durch eine Protokolleinheit einer Medienzugriffssteuerung, im Folgenden MAC genannt, für eine Übertragung einer Broadcast-Nachricht einer Systeminformation über den gemeinsam genutzten Abwärtsstrecken-Transportkanal (302); und
**gekennzeichnet ist durch**
Bilden einer MAC-Protokolldateneinheit, im Folgenden PDU genannt, gemäß der Broadcast-Nachricht einer Systeminformation, wobei die MAC-PDU keine Header- bzw. Kopfzeilenfelder umfasst (304),
wobei eine spezifische temporäre Funknetzwerkkennung für die Übertragung der Broadcast-Nachricht einer Systeminformation über den gemeinsam genutzten Abwärtsstrecken-Transportkanal genutzt wird.

7. Kommunikationsvorrichtung (100) nach Anspruch 6, **dadurch gekennzeichnet, dass** die MAC-PDU nur eine MAC-Servicedateneinheit, SDU genannt, entsprechend der Broadcast-Nachricht einer Systeminformation umfasst.

8. Kommunikationsvorrichtung (100) nach Anspruch 6, **dadurch gekennzeichnet, dass** die MAC-PDU keine von der MAC-Protokolleinheit hinzugefügten Padding- bzw. Füll-Bits umfasst.

9. Kommunikationsvorrichtung (100) nach Anspruch 6, **dadurch gekennzeichnet, dass** der Programmcode (112) ferner umfasst:
Auffüllen der Broadcast-Nachricht einer Systeminformation, um in eine Transportblockgröße zu passen, durch eine Protokolleinheit einer höheren Ebene.

10. Kommunikationsvorrichtung (100) nach Anspruch 6, **dadurch gekennzeichnet, dass** die Protokolleinheit einer höheren Ebene eine Protokolleinheit einer Funkressourcen-Steuerung, RRC genannt, ist.

## Revendications

1. Procédé pour améliorer la transmission d'un canal de transport partagé de liaison descendante dans un système de communication sans fil, le procédé comprenant :
le mappage d'un canal de commande de diffusion à un canal de transport partagé de liaison descendante par une entité de protocole de commande d'accès au support, appelée ci-après MAC, pour la transmission d'un message de diffusion d'informations système à travers le canal de transport partagé de liaison descendante (302) ; et
**caractérisé par**
la formation d'une unité de données de protocole MAC, appelée ci-après PDU, selon le message de diffusion d'informations système, où la PDU MAC ne comprend pas de champs d'en-tête (304),
dans lequel un identifiant temporaire de réseau radio spécifique est utilisé pour la transmission du message de diffusion d'informations système à travers le canal de transport partagé de liaison descendante.

2. Procédé de la revendication 1, **caractérisé en ce que** la PDU MAC ne comprend qu'une unité de données de service MAC, appelée SDU, correspondant au message de diffusion d'informations système.

3. Procédé de la revendication 1, **caractérisé en ce que** la PDU MAC ne comprend pas de bits de bourrage ajoutés par l'entité de protocole MAC.

4. Procédé de la revendication 1, **caractérisé en ce que** le procédé comprend en outre :
le bourrage du message de diffusion d'informations système pour s'adapter à une taille de bloc de transport par une entité de protocole de couche supérieure.

5. Procédé de la revendication 4, **caractérisé en ce que** l'entité de protocole de couche supérieure est une entité de protocole de commande de ressource radio, appelée RRC.

6. Dispositif de communication (100) utilisé dans un système de communication sans fil pour améliorer la transmission d'un canal de transport partagé de liaison descendante, le dispositif de communication (100) comprenant :
un circuit de commande (106) pour réaliser des fonctions du dispositif de communication (100) ;
une unité centrale de traitement (108) installée dans le circuit de commande (106) pour exécuter un code de programme (112) afin de faire fonctionner le circuit de commande (106) ; et
une mémoire (110) couplée à l'unité centrale de traitement (108) pour stocker le code de programme (112) ;
dans lequel le code de programme (112) comprend :
le mappage d'un canal de commande de diffusion à un canal de transport partagé de liaison descendante par une entité de protocole de commande d'accès au support, appelée ci-après MAC, pour la transmission d'un message de diffusion d'informations système à travers le canal de transport partagé de liaison descendante (302) ; et
**caractérisé par**
la formation d'une unité de données de protocole MAC, appelée ci-après PDU, selon le message de diffusion d'informations système, où la PDU MAC ne comprend pas de champs d'en-tête (304),
dans lequel un identifiant temporaire de réseau radio spécifique est utilisé pour la transmission du message de diffusion d'informations système à travers le canal de transport partagé de liaison descendante.

7. Dispositif de communication (100) de la revendication 6, **caractérisé en ce que** la PDU MAC ne comprend qu'une unité de données de service MAC, appelée SDU, correspondant au message de diffusion d'informations système.

8. Dispositif de communication (100) de la revendication 6, **caractérisé en ce que** la PDU MAC ne comprend pas de bits de bourrage ajoutés par l'entité de protocole MAC.

9. Dispositif de communication (100) de la revendication 6, **caractérisé en ce que** le code de programme (112) comprend en outre :
le bourrage du message de diffusion d'informations système pour s'adapter à une taille de bloc de transport par une entité de protocole de couche supérieure.

10. Dispositif de communication (100) de la revendication 6, **caractérisé en ce que** l'entité de protocole de couche supérieure est une entité de protocole de commande de ressource radio, appelée RRC.
